Europäisches Patentamt

European Patent Office

Office européen des brevets

(11) Veröffentlichungsnummer: **0 494 360 A2**

# EUROPÄISCHE PATENTANMELDUNG

(21) Anmeldenummer: **91119302.7**

(51) Int. Cl.⁵: **F16K 31/06**

(22) Anmeldetag: **13.11.91**

(30) Priorität: **11.01.91 DE 9100272 U**

(43) Veröffentlichungstag der Anmeldung:
**15.07.92 Patentblatt 92/29**

(84) Benannte Vertragsstaaten:
**AT CH DE ES FR GB IT LI**

(71) Anmelder: **ROBERT BOSCH GMBH**
**Postfach 30 02 20**
**W-7000 Stuttgart 30(DE)**

(72) Erfinder: **Abele, Helmut, Ing.**
**Beethovenstrasse 45**
**W-7310 Plochingen(DE)**
Erfinder: **Besser, Ulrich, Ing.**
**Bodelshofer Weg 151**
**W-7312 Kirchheim/Teck(DE)**
Erfinder: **Welte, Christian, Dipl.-Ing.**
**Drosselweg 5**
**W-7449 Neckartenzlingen(DE)**

(54) **Elektromagnetisch betätigbares Regelventil.**

(57) Die Erfindung bezieht sich auf ein elektromagnetisch betätigtes Regelventil (1) zum Regeln der Hauptgaszufuhr zu einem Brenner eines gasbeheizten Gerätes mit einem Anker (16) und einer mit einem regelbaren stromansteuerbaren Wicklung (4). Es wird vorgeschlagen, den Anker (16) beweglich über eine Linearkugelführung (26) mit der Wicklung (4) zu verbinden, wobei die Linearkugelführung (4) auf einer den Gasraum abdichtenden Führungshülse (29) läuft. Durch den vorgeschlagenen Aufbau erhält man ein kompaktes Regelventil (1) mit einer kleinen Strom-Weg-Hysterese.

EP 0 494 360 A2

## Stand der Technik

Die Erfindung bezieht sich auf ein elektromagnetisch betätigbares Regelventil nach der Gattung des Hauptanspruchs. Aus der DE-AS 16 50 552 ist ein elektromagnetisch betätigter Druckregler bekannt, der eine stetige Regelung des Druckes in Abhängigkeit von der an die Magnetspule angelegten Spannung gestattet. Die dabei mit dem regelbaren Strom beschickte Magnetspule betätigt ein Verschlußstück in Schließrichtung. Der Magnetanker und das Verschlußstück sind mechanisch geführt wobei die Führung des Magnetankers in einem Führungsrohr unter Schmierung gleitend mit viskoser Reibung erfolgt. Dieser Ausführungsform haftet der Nachteil an, daß mit Schmiermittel versehene Lager gewartet, und der Schmiermittelzustand regelmäßig kontrolliert werden muß. Außerdem muß sichergestellt sein, daß der Raum des Schmiermittels nach außen und gegenüber dem gasführenden Raum gut abgedichtet ist.

## Vorteile der Erfindung

Das erfindungsgemäße Regelventil hat demgegenüber den Vorteil, daß durch die auf der den Gasraum abdichtenden Führungshülse laufende Linearkugelführung ein einfacher, kompakter Aufbau des Regelventils geschaffen wird, bei dem eine Wartung entfällt. Die Ausgestaltung der Führungshülse als dichtendes Element hält den Aufwand an zusätzlichen Teilen gering und vermeidet, daß die eingesetzten Dichtungen Relativbewegungen aufnehmen müssen.

Ein weiterer Vorteil ergibt sich durch die geringe Rollreibung der Linearkugelführung, die eine Verkleinerung der Strom-Ankerweg-Hysterese gegenüber gleitgelagerten Führungen bedingt.

Eine die Magnetkrafttoleranzen ausgleichende zentrale Feder gewährleistet ein individuelles Anpassen des Regelverhaltens auf bei der Fertigung auftretende Bauteiletoleranzen.

## Zeichnung

In der einzigen Figur ist ein Regelventil in den Stellungen "geschlossen" und "offen" gezeigt.

## Beschreibung

Das Regelventil 1 besitzt ein Gehäuse 2, in das ein Spulenkörper 3 mit einer Wicklung 4 eingebaut ist. Von der Wicklung 4 führen Anschlußklemmen 5, geschützt durch ein aufgesetztes zweites Gehäuse 6, zur Außenseite des ersten Gehäuses 2.

Das Gehäuse 2 besitzt auf einer Seite 7 einen Durchbruch, der eine Hülse 8 aufnimmt. Zur Aufnahme einer Schraube 9 ist in die Hülse 8 eine mit einem Gewinde 10 versehene Durchgangsbohrung 11 eingebracht. Die Schraube 9 besitzt ihrerseits ein mit dem Gewinde 10 in Eingriff stehendes Außengewinde 12, einen Kragen 13 zur Aufnahme eines O-Ringes 14 und ein Sackloch 15.

Innerhalb des Spulenkörpers 3 befindet sich ein Anker 16, der auf einer Seite einen mit einem an der Hülse 8 angebrachten Innenkonus 17 in der Stellung "offen" korrespondierenden Außenkonus 18 trägt. Ferner weist diese Seite des Ankers 16 eine Schulter 19 auf, auf der sich eine Feder 20 abstützt, deren Gegenseite in das Sackloch 15 der Schraube 9 mündet.

Auf der anderen Seite trägt der Anker 16 einen Gassteuerkolben 21. Auf diesen sind ein festes 22 und ein über eine Feder 23 bewegliches Dichtelement 24 aufgebracht. Der Grundkörper 25 des Gassteuerkolbens ist hohl und auf den Anker 16 aufgesetzt. Über die Eindringtiefe des Ankers 16 in den Grundkörper 25 des Gassteuerkolbens 21 kann die Lage des Hubes bzw. der Regelweg eingestellt werden.

Der Anker 16 ist mit einer Linearkugelführung 26, enthaltend einen Käfig 27 und Kugeln 28, im Spulenkörper 3 gelagert. Die Kugeln 28 laufen auf einer Seite auf dem Anker 16 und auf der anderen Seite auf einer Führungshülse 29, die sich zwischen der Linearkugelführung 26 und dem Spulekörper 3 befindet. Die Führungshülse 29 erstreckt sich über die Hülse 8 und ist gegen diese mit einem O-Ring 30 abgedichtet. Auf der der Hülse 8 entgegenliegenden Seite des Gehäuses 2 ist ein O-Ring 31 vorgesehen, der sich beim Einbau des Regelventils zwischen die Führungshülse 29, einem das Regelventil 1 diesseitig begrenzendem Blech 32 und einer Wand 33 des das Regelventil aufnehmenden Körpers schmiegt.

Durch die an der Führungshülse 29 anliegenden O-Ringe 30 und 31 und dem in der als Einstellorgan ausgebildeten Schraube aufgenommenen O-Ring 14 ist der Gasraum abgedichtet, ohne daß die Dichtungen Relativbewegungen aufnehmen müssen.

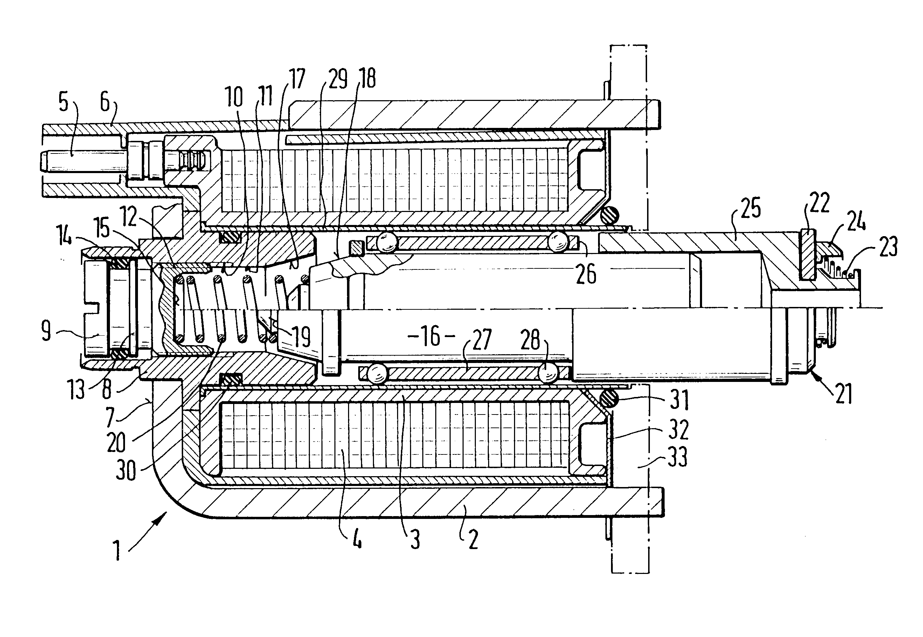

## Patentansprüche

1. Elektromagnetisch betätigbares Regelventil, insbesondere zum Regeln der Gaszufuhr zu einem Brenner eines gasbeheizten Gerätes, mit einem Anker und einer mit einem regelbaren Strom ansteuerbaren Wicklung, dadurch gekennzeichnet, daß der Anker (16) über eine Linearkugelführung beweglich mit dem Wicklungskörper (3) verbunden ist und daß die Linearkugelführung (26) auf einer den Gasraum abdichtenden Führungshülse (29) im Wicklungskörper (3) läuft.

2. Regelventil nach Anspruch 1, dadurch gekennzeichnet, daß die Führungshülse (29) am Wicklungskörper (3) und an einer Hülse (8) anliegt, und gegen diese mittels O-Ringen (31, 30) abgedichtet ist.

3. Regelventil nach Anspruch 1 oder 2, dadurch gekennzeichnet, daß der Anker (16) des Ventils (1) den Gassteuerkolben (21) trägt.

4. Regelventil nach einem der Ansprüche 1 bis 3, dadurch gekennzeichnet, daß eine die Magnetkrafttoleranzen ausgleichende, zentrale Feder vorgesehen ist.